# EUROPEAN PATENT SPECIFICATION

(11) **EP 0 597 519 B1**
(45) Date of publication and mention of the grant of the patent: **17.07.1996**
(21) Application number: 93203032.3
(22) Date of filing: 28.10.1993
(51) Int. Cl.: B60N 2/30

(54) **Vehicle seat with collapsible child seat part**
Fahrzeugsitz mit zusammenfaltbarem Kindersitzteil
Siège de véhicule avec partie repliable formant siège d'enfant

(30) Priority: 10.11.1992 NL 9201964
(43) Date of publication of application: 18.05.1994
(73) Proprietor: NETHERLANDS CAR B.V., 6121 RD Born (NL)
(72) Inventor: Houtzager, Kees, NL-5591 PA Heeze (NL)
(74) Representative: Timmers, Cornelis Herman Johannes

(56) References cited:
- EP-A- 0 286 542
- EP-A- 0 518 726
- DE-A- 2 807 064
- DE-A- 3 020 212
- GB-A- 2 117 633
- GB-A- 2 169 505
- GB-A- 2 243 076

## Description

The invention relates to a vehicle seat according to the preamble of claim 1, such as known from EP-A-0 286 542.

In this known seat the elevated part which constitutes the child seat part is supported by four pivot levers, a first pair between the front of the seat parts and anchor points above the floor pan of the vehicle, and a second pair between the back of this seat part and anchor points, which also lie above the floor pan and near the backrest. Thus the weight of the child using the seat is entirely supported by the pivot points and the levers which must be dimensioned accordingly. Another drawback is that in use at least the second pair of levers is clearly visible and accessible.

The invention aims to overcome these drawbacks and according to the invention this is achieved by means of the measures according to the characterizing part of claim 1.

Not only can there be only one, preferably relatively wide, coupling lever at the front of the child seat part but another major advantage is that when in position for use, the back end of the part rests firmly on the part of the seat between the cut-out and the backrest, taking up the greater part of weight of the child. The entire structure is much simplier while the hook-shape of the lever makes it possible that the lever is neatly stored away and out of sight when the child seat part is not in use.

Preferred embodiments are described in the claims 2-6.

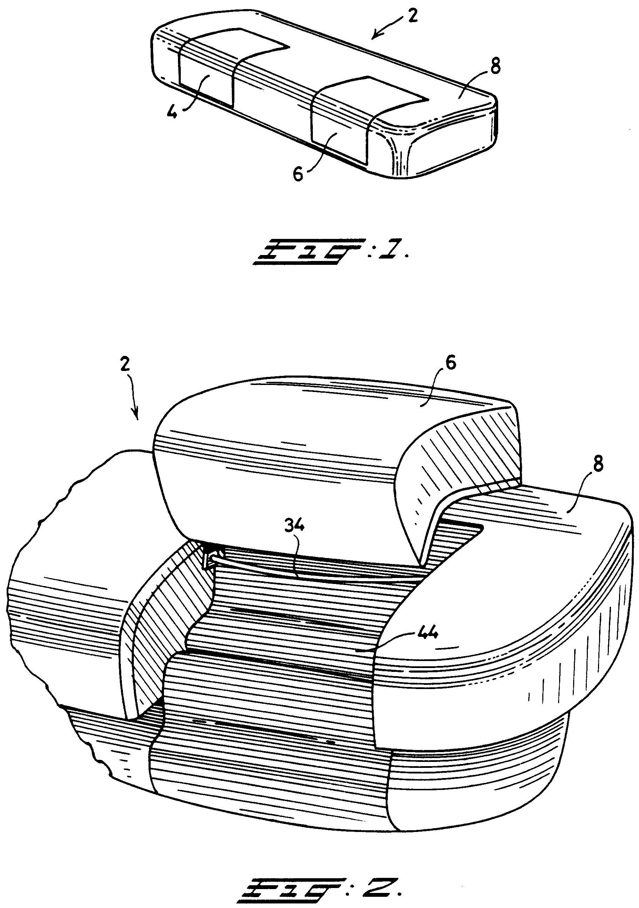

GB-A-2 243 076 shows an arrangement with which an adult seat can be partly converted into a child seat in that either a cut-out part of the backrest can pivot about a horizontal axis to come to lie on the fixed seat part in front of the backrest (fig. 1) or a cut-out part of the seat part can be raised by means of a ratchet arrangement.

DE-A-3 020 212 shows how a detachable part, cut-out from the middle portion of the fixed seat part can be used as a raised child seat by placing it on top of one of the remaining portions of this seat part.

The use of a curved coupling lever coupled to an entire adult seat part is known as such from either GB-A-2 117 633 or GB-A-2 169 505. In both cases the function is different from the function of the curved lever as used according to the invention: it is used in a mechanism which allows for the tilting of the seat part into a vertical position to increase the loading space.

The invention is elucidated on the hand of the drawing, in which:
Figure 1 is a perspective and schematic drawing of a vehicle seat according to the invention provided with two parts constituting child seats.
Figure 2 is a perspective drawing of a part of this seat with the child seat part in position for use.
Figure 3 is a cross-section of the vehicle seat according to the invention in the position in which the child seat part is not in use.
Figure 4 is a cross-section similar to figure 3, but in which a broken line indicates the first phase when the child seat part has been swung up.
Figure 5 is a cross-section of the seat according to the invention with the child seat part in position for use.
Figure 6 is a drawing similar to figure 5 in which a cover plate used according to the invention is shown.
Figure 7 is a drawing similar to figure 3 of an embodiment provided with an extra locking device for the child seat part.

In figure 1, a vehicle seat is indicated schematically by the reference numeral 2; its backrest has not been drawn. Two child seats 4, 6 have been integrated into this vehicle seat 2.

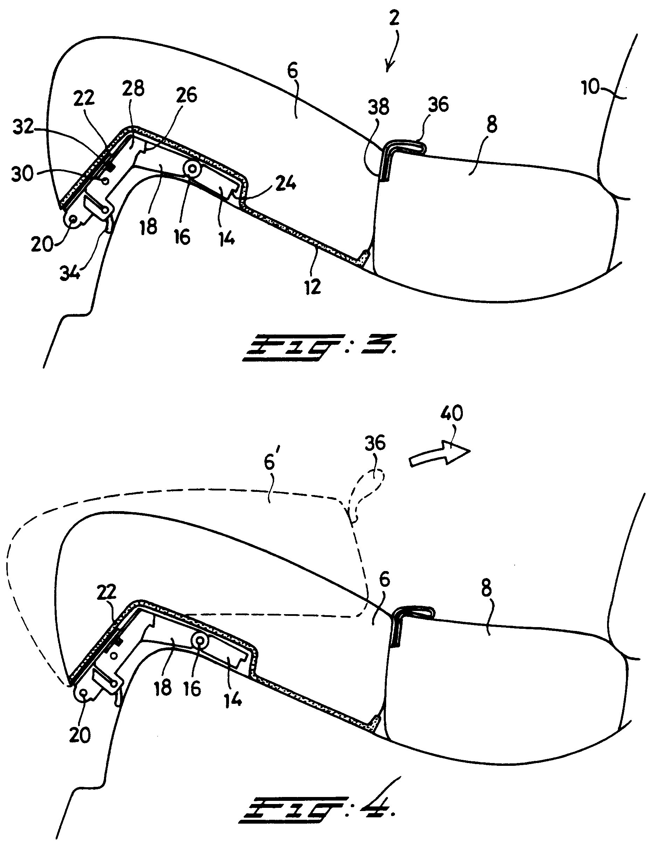

Figure 2 shows this vehicle seat, also without the backrest, in which the child seat part 6 has been swung up, thus in position for use.

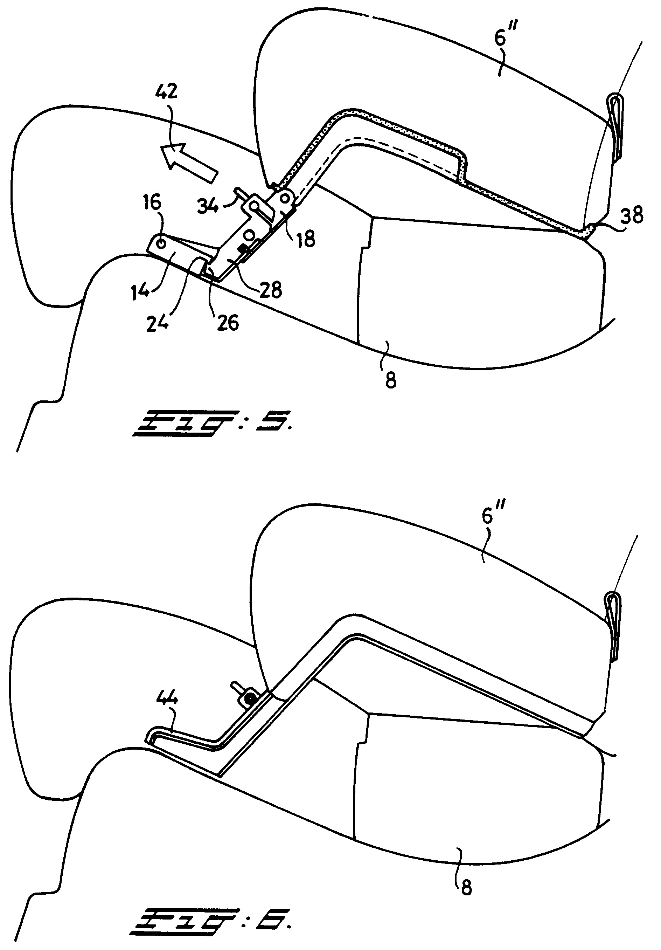

The cross-sections shown in figures 3 to 6 inclusive display in greater detail the construction of the vehicle seat according to the invention. The fixed portion of the seat 2 is indicated by the reference numeral 8; the backrest is indicated by 10. The fixed portion 8 as well as the child seat part 6 that has been cut out of the fixed portion rest on the fixed base 12, which may be part of the vehicle pan or a separate structural part that can be mounted on the pan. This base has two mounting supports 14, situated at a distance from each other and near the two longitudinal sides of the child seat part 6, each of which is connected at the pivot joint 16 to the one end of a hook-shaped coupling lever 18, the other end of which is connected by a pivot joint at 20 to the fixed underside 22 of the portion constituting the child seat 6. As the figures show, each mounting support 14 has been provided with an undercut 24 which co-operates with the hook-shaped end 26 of a locking catch 28, which, pivoting at point 30, is carried by the coupling lever 18. A compression spring 32 has been incorporated between the coupling lever and the locking catch 28 while the two locking catches 28 are connected to each other by means of a pulling element 34. A second, loop-shaped pulling element 36 is attached to the back end 38 of the child seat part 6.

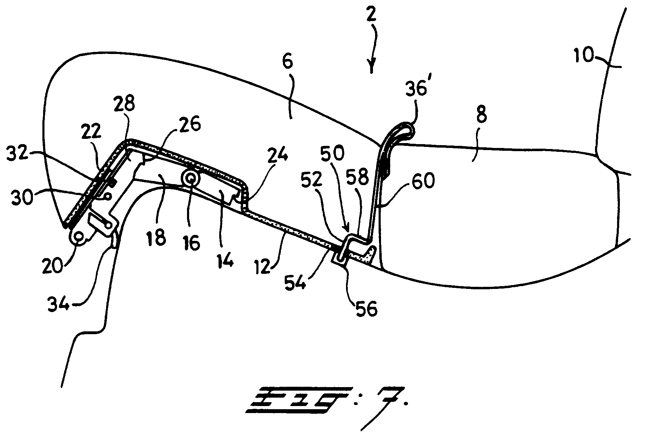

Swinging the child seat part 6 upwards into position for use is illustrated in figures 4 and 5. First, the child seat part 6 is brought into position 6', drawn with broken lines, by means of the loop-shaped pulling element 36 after which the portion constituting the child seat 6 is pulled over the fixed portion 8 of the seat towards the rear to the position drawn in figure 5 in which it is indicated by 6''. In this position, the back end 38 rests on the fixed portion 8 of the seat; the coupling lever 18 has been swung back and the hook 26 of the locking catch 28, due to the action of the compression spring 32, has fallen behind the undercut 24 of the mounting support 14 so that a rigidly locked entity is obtained. As the figures show, the child not only has a comfortable elevated seat, but it can also assume a normal sitting position with the lower part of its legs in the space made available in the fixed portion 8 of the seat.

Swinging the child seat part back down is done simply by pulling on the pulling element 34 in the direction of the arrow 42. By doing so, the hook 26 is released from the undercut 24 and the portion constituting the child seat part can be returned to the position drawn in figure 4.

Of course, it is not inconceivable that a child sitting on the child seat according to the invention, will put objects such as toys or food, intentionally or unintentionally, in the space created under the child seat. This can be effectively prevented by fitting a cover plate 44 onto the two coupling levers 18, as shown in figure 6 as well as in figure 2. Not only will the space under the sitting portion be protected by this plate, it will also function as a footrest for the child.

Although the embodiment described in the foregoing functions in a fully satisfactory and safe manner, it is conceivable that an extra safeguard for the child seat part may be desired, when this seat is not in position for use, in order to prevent it from swinging out unintentionally; for example, in the event of an accident. This can be simply realized by means of the embodiment shown in figure 7. In this embodiment there is a locking bar 50 in the child seat part 6 that runs crosswise and has a first flanged part 52 which, by way of an appropriate recess 54 in the fixed underside 22 of the child seat part, fits into a locking recess 56 in the fixed base 12, and which has a second flanged part 58 which is connected by means of the pulling element 60 to the loop-shaped pulling element 36', the function of which corresponds with that of the pulling element 36, which has already been discussed above. In this way, any unintentional sliding forward of the portion constituting the child seat 6 is effectively prevented. When the child seat part 6 is to be swung up, it is sufficient to pull on the loop-shaped pulling element 36', as a result of which the locking bar 50 is rotated anticlockwise, the flanged part 52 is released from the recess 56 and the child seat part 6 can be brought into position for use in the manner as described previously.

Of course, various other ways of locking are possible.

## Claims

1. Vehicle seat (2) with a part (4, 6) to be used as an elevated child seat, which part (4, 6), starting from the front edge of the seat, has been cut out from the seat leaving free a portion of the seat lying between this recess and the backrest (10), and has a pivot axis (20) situated near the front end thereof which is connected by means of a pivot joint to the first end of at least one coupling lever (18), supporting the front edge, the second end of the lever (18) being connected by a second pivot point (16) to a fixed point (14) under the seat (2), characterized in that the coupling lever (18) is made in a curved form or is hooked shaped, and is mounted in such a way that its external curve faces the child seat part (4, 6) when this part is not in position for use and constitutes the only pivot connection between this seat part (4, 6) and the fixed point (14), the back end of the child seat part (4, 6) resting, in use, on the vehicle seat behind the cut-out and in front of the backrest (10).

2. Vehicle seat according to claim 1, characterized in that the coupling lever is connected by said second pivot point (16) in the form of a pivot joint (16) to a mounting support (14) situated on the base (12) supporting the seat, and in that the end of the mounting support (14) which faces the backrest is provided with an undercut (24), which co-operates with the hook-shaped end (26) of a spring-loaded pivoting locking catch (28) carried by the foremost part of the coupling lever (18).

3. Vehicle seat according to claim 2, characterized in that the back end of the child seat part (4, 6) as well as the front side of the locking catch are connected to a pulling element (36, 34).

4. Vehicle seat according to claims 1 - 3, characterized by two coupling levers situated near the two longitudinal sides of the child seat part.

5. Vehicle seat according to claim 4, characterized by a cover plate (44) connected to the coupling levers.

6. Vehicle seat according to claims 1 - 5, characterized in that the back end of the child seat part (4, 6) is provided with a pulling element (36') that is connected to a locking device (50, 52, 54) incorporated between this seat and the base (12) supporting the seat, which is released when the pulling element is pulled on.

## Patentansprüche

1. Fahrzeugsitz (2) mit einem Teil (4, 6), der als ein erhöhter Kindersitz benutzt wird, wobei dieser Teil (4, 6) - von der Vorderkante des Sitzes beginnend - aus dem Sitz herausgeschnitten worden ist und einen zwischen dieser Aussparung und der Rückenlehne (10) liegenden Teil des Sitzes frei läßt, und eine Drehachse (20) nahe dem vorderen Ende davon aufweist, die mittels eines Drehgelenks mit dem ersten Ende zumindest eines Kupplungshebels (18) verbunden ist, der die Vorderkante abstützt, wobei das zweite Ende des Hebels durch einen zweiten Schwenkpunkt (16) mit einem Festpunkt (14) unter dem Sitz (2) verbunden ist; dadurch gekennzeichnet, daß der Kupplungshebel (18) in einer gekrümmten Form hergestellt oder hakenförmig, und in einer solchen Weise montiert ist, daß seine Außenkrümmung dem Kindersitzteil (4, 6) zugekehrt ist, wenn sich dieser Teil nicht in der Position für den Gebrauch befindet, und die einzige Schwenkverbindung zwischen diesem Sitzteil (4, 6) und dem Festpunkt (14) bildet, wobei das Rückenende des Kindersitzteils (4, 6) im Gebrauch auf dem Fahrzeugsitz hinter dem Ausschnitt und vor der Rückenlehne (10) aufliegt.

2. Fahrzeugsitz nach Anspruch 1, dadurch gekennzeichnet, daß der Kupplungshebel durch den besagten zweiten Schwenkpunkt (16) in der Form eines Drehgelenks (16) mit einer Halterung (14) verbunden ist, die auf dem den Sitz abstützenden Unterteil (12) positioniert ist, und daß das Ende der Halterung (14), das der Rückenlehne zugekehrt ist, mit einer Unterschneidung (24) versehen ist, die mit dem hakenförmigen Ende (26) eines federbelasteten Schwenksperriegels (28) zusammenwirkt, der von dem vordersten Teil des Kupplungshebels (18) getragen wird.

3. Fahrzeugsitz nach Anspruch 2, dadurch gekennzeichnet, daß das Rückenende des Kindersitzteils (4, 6) sowie die Vorderseite des Sperriegels mit einem Zugelement (36, 34) verbunden sind.

4. Fahrzeugsitz nach den Ansprüchen 1 - 3, gekennzeichnet durch zwei nahe den Langsseiten des Kindersitzteils positionierten Kupplungshebel.

5. Fahrzeugsitz nach Anspruch 4, gekennzeichnet durch eine mit den Kupplungshebeln verbundene Abdeckplatte (44).

6. Fahrzeugsitz nach den Ansprüchen 1 - 5, dadurch gekennzeichnet, daß das Rückenende des Kindersitzteils (4, 6) mit einem Zugelement (36') versehen ist, das an eine zwischen diesem Sitz und dem den Sitz abstützenden Unterteil (12) eingebaute Sperrvorrichtung (50, 52, 54) angeschlossen ist, die freigegeben wird, wenn man an dem Zugelement zieht.

## Revendications

1. Siège de véhicule (2) dont un élément (4, 6) est destiné à être utilisé comme siège d'enfant surélevé, cet élément (4, 6), qui part du bord avant du siège, ayant été découpé dans le siège en laissant subsister une partie du siège qui s'étend entre cet évidement et le dossier (10), et comportant un axe de pivotement (20) situé à proximité de son extrémité avant, qui est relié au moyen d'une articulation à pivot à la première extrémité d'au moins un levier d'accouplement (18), supportant le bord avant, la seconde extrémité du levier (18) étant reliée, par un second pivot (16), à un point fixe (14) se trouvant sous le siège (2), caractérisé en ce que le levier d'accouplement (18) est réalisé sous une forme courbée ou est en forme de crochet, et est monté d'une manière telle que sa courbure externe soit tournée vers l'élément formant siège d'enfant (4, 6), quand cet élément n'est pas en position d'utilisation, et constitue la seule liaison pivotante entre cet élément de siège (4, 6) et le point fixe (14), l'extrémité arrière de l'élément formant siège d'enfant (4, 6) reposant, en utilisation, sur le siège de véhicule, en arrière de la découpe et en avant du dossier (10).

2. Siège de véhicule selon la revendication 1, caractérisé en ce que le levier d'accouplement est relié par ledit second pivot (16), qui se présente sous la forme d'une articulation à pivot (16), à un support de montage (14) situé sur la base (12) qui supporte le siège, et en ce que l'extrémité du support de montage (14), qui est tournée vers le dossier, est pourvue d'un cran (24), qui coopère avec l'extrémité en forme de crochet (26) d'un cliquet de verrouillage pivotant (28) chargé par un ressort, que porte la partie la plus en avant du levier d'accouplement (18).

3. Siège de véhicule selon la revendication 2, caractérisé en ce que l'extrémité arrière de l'élément formant siège d'enfant (4, 6) ainsi que le côté avant du cliquet de verrouillage sont reliés à un organe de traction (36, 34).

4. Siège de véhicule selon les revendications 1 à 3, caractérisé par deux leviers d'accouplement situés à proximité des deux côtés longitudinaux de l'élément formant siège d'enfant.

5. Siège de véhicule selon la revendication 4, caractérisé par une plaque de recouvrement (44) reliée aux leviers d'accouplement.

6. Siège de véhicule selon les revendications 1 à 5, caractérisé en ce que l'extrémité arrière de l'élément formant siège d'enfant (4, 6) est munie d'un organe de traction (36') qui est relié à un dispositif de verrouillage (50, 52, 54) inséré entre ce siège et la base (12) supportant le siège, dispositif de verrouillage qui est libéré quand on tire sur l'organe de traction.
